# FASCICULE DE BREVET EUROPEEN

(11) **EP 3 384 113 B1**
(45) Date de publication et mention de la délivrance du brevet: **23.10.2019**
(21) Numéro de dépôt: 16819139.3
(22) Date de dépôt: 30.11.2016
(51) Int. Cl.: E05B 77/44, E05B 85/06, E05B 17/00, E05B 17/04, B60R 25/023

(54) **VERROU POUR MÉCANISME DE SERRURE DE VÉHICULE AUTOMOBILE**
SCHLOSS FÜR EINEN FAHRZEUGVERRIEGELUNGSMECHANISMUS
LOCK FOR A MOTOR VEHICLE LOCK MECHANISM

(30) Priorité: 30.11.2015 FR 1561550
(43) Date de publication de la demande: 10.10.2018
(73) Titulaire: U-Shin France, 94000 Créteil (FR)
(72) Inventeur: DESEGHER, Emilien, 94000 Creteil (FR)
(74) Mandataire: Verriest, Philippe
(86) Numéro de dépôt international: PCT/FR2016/053143
(87) Numéro de publication internationale: WO 2017/093660

(56) Documents cités:
- EP-A1- 1 927 710
- US-A- 2 049 742
- US-A- 4 074 548
- US-A1- 2004 148 983

## Description

La présente invention concerne un verrou pour mécanisme de serrure de véhicule automobile.

L'invention se rapporte notamment au domaine des verrous de porte de véhicules automobiles du type dans lequel le verrou comporte un stator fixe, un rotor monté en rotation autour de son axe dans le stator et comprenant des organes de codage. Le rotor est susceptible d'entrainer en rotation un moyen de commande de la serrure d'une porte. Les organes de codage également appelés paillettes sont configurés pour maintenir le rotor fixe en rotation par rapport au stator intermédiaire et configurés pour libérer le rotor en rotation par rapport au stator intermédiaire lors de l'introduction d'un insert de clé conforme au codage dans le logement longitudinal du rotor. Le document US 2 049 742 décrit un verrou de l'art antérieur.

Parmi les verrous pour mécanisme de serrure de véhicule automobile, il est connu notamment les verrous dits non-débrayables et les verrous débrayables.

Un verrou non débrayable dispose, comme système de protection contre l'effraction en rotation en force, des zones fusibles sur le rotor. Ainsi, si un tournevis ou un insert de clé non conforme au codage des organes de codage est introduit dans le verrou sans dépasser la ligne de fusibilité, il existe un couple de rupture où le verrou finit par céder le long de la ligne de fusibilité par cisaillement des paillettes. Le rotor tourne alors « dans le vide », et le moyen de commande n'est pas entrainé rendant inopérant la fonction de déverrouillage.

Un inconvénient de ce type de verrou non débrayable est que les zones fusibles sur le rotor sont efficaces seulement si le tournevis ou l'insert de clé non conforme au codage n'est introduit que partiellement, et ne dépasse pas la dernière zone fusible du rotor. En effet, si un tournevis ou une mauvaise clé est introduit dans le verrou en dépassant la ligne de fusibilité, celle-ci est alors inopérante, et il n'y a plus de protection contre l'effraction. Le rotor peut alors tourner en entraînant le moyen de commande et ainsi déverrouiller le verrou.

Il est également connu un verrou débrayable comporte un stator fixe s'étendant selon un axe principal et logeant un stator intermédiaire. Le stator intermédiaire loge un rotor mobile en rotation suivant l'axe principal et est configuré pour entrainer en mouvement un moyen de commande. Le rotor comprend également des organes de codage du rotor par rapport au stator intermédiaire tels que des paillettes. Le verrou débrayable comporte également des moyens de débrayage qui, sous l'effet d'une rotation du stator intermédiaire par rapport au stator consécutive à l'entrainement en rotation du rotor à l'aide d'un tournevis ou d'un insert de clé non conforme au codage, débraye l'accouplement du rotor avec le moyen de commande.

Les verrous débrayables ne peuvent pas être déverrouillés par la rotation en force d'un tournevis ou d'un insert de clé non conforme au codage.

Un inconvénient des verrous débrayables de l'art antérieur est qu'ils nécessitent plusieurs pièces supplémentaires par rapport à un verrou non débrayable notamment pour réaliser des moyens de débrayage de l'accouplement du rotor avec le moyen de commande. Cet aspect implique une hausse importante sur le prix du verrou.

Un autre inconvénient est que les verrous débrayables de l'art antérieur présentent un débrayage qui est réversible, c'est-à-dire qu'il est possible de remettre le stator intermédiaire du verrou dans un état initial en tournant la partie avant du stator intermédiaire à 180 ou 360 degrés, après une tentative d'effraction par rotation en force. Cet aspect limite la sécurité du verrou au forçage.

La présente invention a pour but de pallier les inconvénients précités en proposant une alternative aux verrous débrayables classiques moins onéreuse mais tout aussi robuste contre les effractions par rotation en force.

A cet effet, la présente invention propose un verrou notamment pour mécanisme de serrure de véhicule automobile, comprenant un stator s'étendant selon un axe principal et logeant un stator intermédiaire,
- ledit stator intermédiaire logeant un rotor mobile en rotation suivant l'axe principal et configuré pour entraîner en mouvement un moyen de commande,
- le rotor comprenant des organes de codage configurés pour maintenir le rotor fixe en rotation par rapport au stator intermédiaire et configurés pour libérer le rotor en rotation par rapport au stator intermédiaire lors de l'introduction d'un insert de clé conforme au codage dans le logement longitudinal du rotor,
- le stator intermédiaire comprenant
- une partie avant coopérant avec les organes de codage,
- une partie arrière mobile entre une position de libération dans laquelle la partie arrière autorise la rotation du rotor et une position de blocage dans laquelle la partie arrière bloque le rotor en rotation,
- une partie centrale disposée entre la partie avant et la partie arrière,
- une première zone fusible disposée entre la partie centrale et la partie arrière, et
- une deuxième zone fusible disposée entre la partie avant et la partie centrale,
ladite première zone fusible étant adaptée pour se rompre dans une première position angulaire du stator intermédiaire, lorsque le couple exercé sur le stator intermédiaire par un élément non conforme au codage sur le rotor à l'état fixe en rotation atteint un premier couple prédéterminé inférieur aux couples de rupture des organes de codage et de la deuxième zone fusible de sorte que, lorsque la première zone fusible est rompue, la partie arrière est déplacée vers sa position de blocage du rotor.

Un tel verrou pour mécanisme de serrure présente l'avantage d'être moins onéreux qu'un verrou débrayablc classique, tout en garantissant la même robustesse contre les effractions par rotation en force qu'un verrou débrayable de l'art antérieur.

En outre, la deuxième zone fusible du stator intermédiaire est configurée pour se rompre pour désolidariser des parties centrale et avant du stator intermédiaire et permettre de faire tourner la partie avant du stator « dans le vide » sans plus pouvoir restaurer l'emboîtement des parties du stator intermédiaire. Cet aspect augmente considérablement la sécurité du verrou au forçage.

Suivant des modes de réalisation préférés, le verrou de véhicule automobile selon l'invention comprend une ou plusieurs des caractéristiques suivantes:
- lorsque la première zone fusible est rompue, la partie avant et la partie centrale sont mobiles en rotation suivant l'axe principal relativement à la partie arrière ; et/ou
- ladite deuxième zone fusible est adaptée pour se rompre, après la première zone fusible, lorsque le couple exercé atteint un deuxième couple prédéterminé supérieur au premier couple prédéterminé et que le stator intermédiaire est pivoté au-delà d'une deuxième position angulaire située angulairement après la première position angulaire de sorte que la partie avant est mobile en rotation suivant l'axe principal relativement à la partie centrale ; et/ou
- le stator comprend au moins une structure de blocage et la partie centrale du stator intermédiaire comprend au moins une projection configurée pour coopérer avec la structure de blocage à ladite deuxième position angulaire, de sorte à permettre que ladite deuxième zone fusible se rompe au-delà de ladite deuxième position angulaire ; et/ou
- ladite projection est une excroissance et ladite structure de blocage est un gaudron de blocage configuré pour maintenir l'excroissance et bloquer la partie centrale en rotation ; et/ou
- le rotor comprend une troisième zone fusible délimitant une partie antérieure du rotor et une partie postérieure du rotor, et la partie arrière du stator intermédiaire comporte au moins une forme d'emboîtement apte à s'emboiter axialement dans une forme d'emboîtement complémentaire ménagée sur la partie postérieure du rotor,
   la troisième zone fusible du rotor étant adaptée pour se rompre lorsque la partie arrière du stator intermédiaire est couplée à la partie postérieure du rotor et un couple exercé par l'élément sur le rotor atteint un couple de rotor prédéterminé de sorte que la partie antérieure du rotor est mobile en rotation suivant l'axe principal par rapport à la partie postérieure du rotor ; et/ou
- chaque forme d'emboîtement est constituée par un plot apte à coopérer par emboîtement axial avec un évidement formant forme d'emboîtement complémentaire ; et/ou
- la partie arrière du stator intermédiaire est agencée pour se mouvoir en translation selon l'axe principal du verrou à l'intérieur du stator après rupture de la première zone fusible entre une position initiale dans laquelle la partie arrière est solidaire de la partie centrale du stator intermédiaire, et une position finale dans laquelle la partie arrière est bloquée en translation après ladite rupture ; et/ou
- la partie avant du stator intermédiaire est agencée pour coopérer par emboîtement avec au moins une forme de débrayage fixe en rotation ménagée sur la partie arrière du stator intermédiaire, lorsque la partie avant et la partie centrale sont en rotation par rapport au stator provoquant la translation axiale de la partie arrière vers sa position finale ; et/ou
- la partie arrière du stator intermédiaire comporte au moins une forme de couplage apte à s'emboiter axialement dans une forme de couplage complémentaire ménagée sur le moyen de commande ; et/ou
- chaque forme de couplage est constituée par une protubérance apte à coopérer par emboitement axial avec un renfoncement formant forme de couplage complémentaire.

L'invention porte en outre sur un dispositif de serrure notamment pour véhicule automobile, caractérisé en ce qu'il intègre au moins un verrou tel que décrit précédemment.

D'autres caractéristiques et avantages de l'invention apparaîtront à la lecture de la description qui suit d'un mode de réalisation préféré de l'invention, donné à titre d'exemple non limitatif et en référence aux dessins annexés sur lesquels :
- la figure 1 est une vue en plan d'un stator intermédiaire du verrou selon une variante de l'invention ;
- la figure 2 est une vue en plan d'un rotor du verrou selon une variante de l'invention ;
- la figure 3 est une vue dans l'espace du verrou selon une variante de l'invention, le rotor et le stator étant dans une première position angulaire ;
- la figure 4 est similaire à la figure 3 mais le rotor et le stator sont dans une deuxième position angulaire ;
- la figure 5 est une vue dans l'espace du verrou des figures 3 et 4, où la partie arrière du stator intermédiaire est retirée ; et
- la figure 6 est une vue dans l'espace du verrou des figures 3 à 5, où la partie postérieure du rotor est retirée.

En se référant aux figures, l'invention concerne un verrou 2, et plus particulièrement un verrou pour mécanisme de serrure de véhicule automobile.

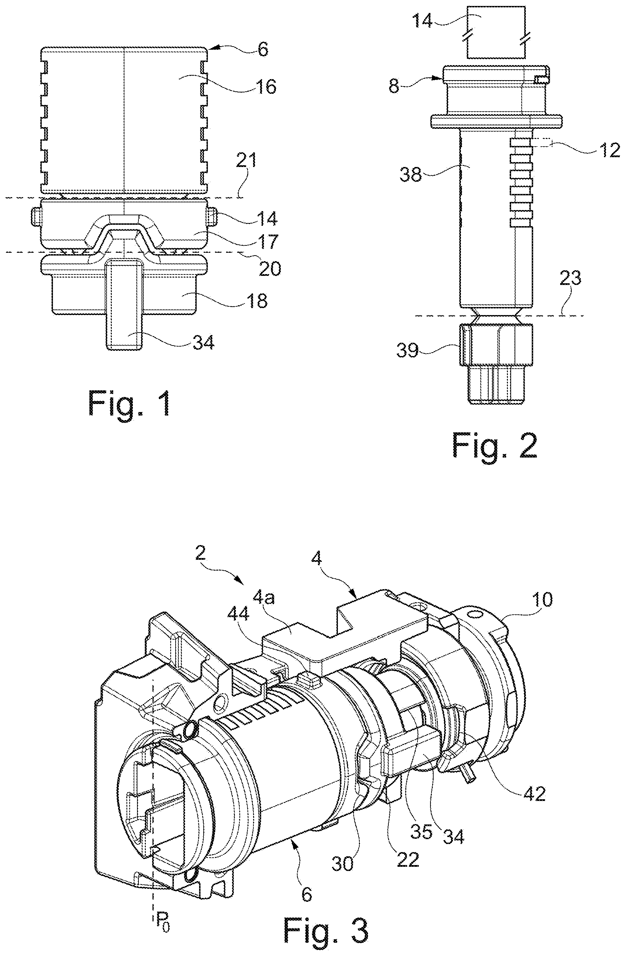

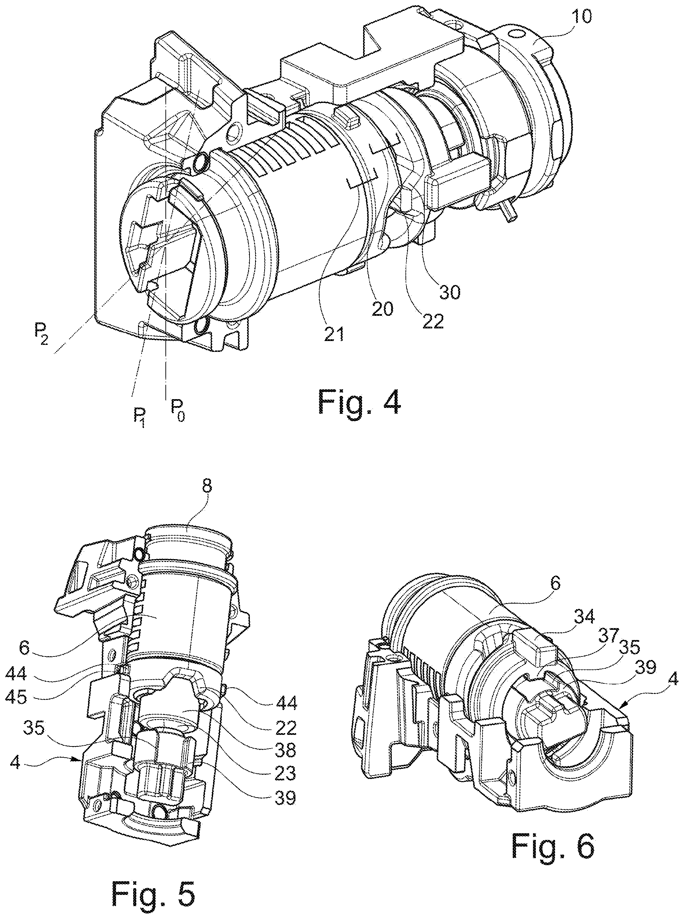

Le verrou comprend un stator 4 s'étendant selon un axe principal et logeant un stator intermédiaire 6. Le stator intermédiaire 6 loge un rotor 8 mobile en rotation suivant l'axe principal. En outre, le rotor 8 est configuré pour entraîner en mouvement un moyen de commande 10 visibles aux figures 3 et 4.

Par « moyen de commande », on entend de préférence une pièce séparée du et fixée au rotor 8, et configurée pour actionner le verrouillage ou le déverrouillage d'une serrure associée au verrou en étant entraînée en rotation par le rotor 8. En particulier, le moyen de commande 10 peut être un embout de cardan ou de batteuse.

Le rotor 8 comprend des organes de codage 12, tels que des paillettes, configurés pour maintenir le rotor 8 fixe en rotation par rapport au stator intermédiaire 6. Les organes de codage 12 sont configurés pour libérer le rotor 8 en rotation par rapport au stator intermédiaire 6 lors de l'introduction d'un insert de clé conforme au codage dans le logement longitudinal du rotor 8.

Le verrou est actionnable au moyen de l'insert de clé pour déverrouiller ou verrouiller une serrure de porte d'un véhicule automobile.

Selon l'invention, le stator intermédiaire 6 comprend une partie avant 16, une partie arrière 18 et une partie centrale 17 disposée entre les parties avant 16 et arrière 18, une première zone fusible 20 disposée entre la partie centrale et la partie arrière 18, et une deuxième zone fusible 21 disposée entre la partie avant 16 et la partie centrale 17.

L'orientation du verrou est ici déterminée par un côté « avant/antérieur » correspondant à la portion par laquelle l'insert de clé est inséré, et un côté « arrière/postérieur » opposé au côté avant par rapport à un axe principal du verrou.

La partie avant 16 du stator intermédiaire 6 coopère avec les organes de codage 12. En particulier, les organes de codage 12 faisant saillie à l'extérieur du rotor 8 sont insérés dans un ou plusieurs logement correspondant du stator intermédiaire 6 de sorte à solidariser le rotor 8 et le stator intermédiaire 6.

La partie arrière 18 du stator intermédiaire est mobile entre une position de libération dans laquelle la partie arrière 18 autorise la rotation du rotor 8 ; et une position de blocage dans laquelle la partie arrière bloque le rotor 8 en rotation.

Selon un aspect de l'invention, ladite première zone fusible 20 est adaptée pour se rompre dans une première position angulaire P0 du stator intermédiaire 6, lorsque le couple exercé sur le stator intermédiaire 6 par un élément 14 non conforme au codage sur le rotor 8 à l'état fixe en rotation, atteint un premier couple prédéterminé inférieur aux couples de rupture des organes de codage 12 et de la deuxième zone fusible 21.

En d'autres termes lorsqu'un élément 14 tel qu'un tournevis ou une clé au codage différent de celui du rotor 8 est inséré dans le rotor 8 pour forcer le verrou, et le couple exercé sur le stator intermédiaire atteint le premier couple prédéterminé, la première zone fusible 20 se rompt dès que le stator intermédiaire 6 dépasse la première position angulaire P0.

Le couple de rupture des organes de codage est généralement compris entre 25 et 30 Nm. Le premier couple prédéterminé pour la rupture de la première zone fusible peut être compris entre 10 et 15 Nm.

En outre, le verrou est configuré de sorte que lorsque la première zone fusible 20 est rompue, la partie arrière 18 est déplacée vers sa position de blocage du rotor 8.

Un tel verrou pour mécanisme de serrure présente l'avantage d'être moins onéreux qu'un verrou débrayable classique, tout en garantissant la même robustesse contre les effractions par rotation en force qu'un verrou débrayable de l'art antérieur.

En outre, la deuxième zone fusible du stator intermédiaire est configurée pour se rompre pour désolidariser des parties centrale et antérieure du stator intermédiaire et permettre de faire tourner la partie avant du stator « dans le vide » sans plus pouvoir restaurer l'emboîtement des parties du stator intermédiaire. Cet aspect augmente considérablement la sécurité du verrou au forçage.

Avantageusement, le verrou selon l'invention comporte deux zones fusibles sur le stator intermédiaire 6 permettant des de réaliser un système robuste et efficace tout en limitant les coûts par l'utilisation de deux zones fusibles du stator intermédiaire, en particulier sans nécessiter de pièce supplémentaire pour le débrayage du stator intermédiaire et de l'accouplement du rotor avec le moyen de commande.

Selon une variante, lorsque la première zone fusible 20 est rompue, la partie avant 16 et la partie centrale 17 sont mobiles en rotation suivant l'axe principal relativement à la partie arrière 18.

En particulier, la partie arrière 18 en position de blocage devient solidaire du rotor 8, et les parties avant 16 et centrale 17 peuvent tourner librement par rapport à la partie arrière 18. En outre, la partie avant 16 est maintenue solidaire du rotor 8 par les organes de codage 12, et la partie centrale est maintenue solidaire de la partie avant par la deuxième zone fusible 21.

Selon une variante, la deuxième zone fusible 21 est adaptée pour se rompre, après la première zone fusible 20, lorsque le couple exercé atteint un deuxième couple prédéterminé supérieur au premier couple prédéterminé et que le stator intermédiaire 6 est pivoté au-delà d'une deuxième position angulaire P1 située angulairement après la première position angulaire P0 de sorte que la partie avant 16 est mobile en rotation suivant l'axe principal relativement à la partie centrale 17.

Le deuxième couple prédéterminé pour la rupture de la deuxième zone fusible peut être compris entre 20 et 25 Nm.

En d'autres termes lorsque ledit élément 14 est davantage actionné dans le rotor 8 pour forcer le verrou, et le couple exercé sur le stator intermédiaire atteint le deuxième couple prédéterminé, la deuxième zone fusible 21 se rompt dès que le stator intermédiaire 6 dépasse la deuxième position angulaire P1.

En particulier, la partie avant 16 peut alors tourner librement par rapport à la partie centrale 17. En outre, la partie avant 16 est maintenue solidaire du rotor 8 par les organes de codage 12.

Avantageusement, dans une variante préférée, la deuxième zone fusible 21 du stator intermédiaire 6 une fois rompue permet de désolidariser des parties centrale et avant du stator intermédiaire et permettre de faire tourner la partie avant du stator « dans le vide » sans plus pouvoir restaurer l'emboîtement des parties du stator intermédiaire. Cet aspect augmente considérablement la sécurité du verrou au forçage.

Comme on peut le voir sur la figure 5, selon une variante, le stator 4 comprend au moins une structure de blocage 45, et la partie centrale 17 du stator intermédiaire 6 comprend au moins une projection 44 configurée pour coopérer avec la structure de blocage 45 à ladite deuxième position angulaire P1, de sorte à permettre que ladite deuxième zone fusible 21 se rompe au-delà de ladite deuxième position angulaire P1.

Avantageusement, une telle structure de blocage 45 une telle projection 44 permettent d'utiliser un moyen simple de blocage de la partie centrale 17 du stator intermédiaire 6 pour rompre la deuxième zone fusible 21.

Selon une variante, la projection 44 est une excroissance et ladite structure de blocage 45 est un gaudron de blocage configuré pour maintenir l'excroissance et bloquer la partie centrale 17 en rotation.

Selon une variante, le rotor 8 comprend une troisième zone fusible 23 délimitant une partie antérieure 38 du rotor 8 et une partie postérieure 39 du rotor 8, et la partie arrière 18 du stator intermédiaire 6 comporte au moins une forme d'emboîtement 37 apte à s'emboiter axialement dans une forme d'emboîtement complémentaire 35 ménagée sur la partie postérieure 39 du rotor 8.

Selon cette variante, la troisième zone fusible 23 du rotor 8 est adaptée pour se rompre lorsque d'une part la partie arrière 18 du stator intermédiaire 6 est couplée à la partie postérieure 39 du rotor ; et d'autre part un couple exercé par l'élément 14 sur le rotor 8 atteint un couple de rotor prédéterminé. Après la rupture de la troisième zone fusible 23, la partie antérieure 38 du rotor 8 est mobile en rotation suivant l'axe principal par rapport à la partie postérieure 39 du rotor 8.

Le couple de rotor prédéterminé pour la rupture de la troisième zone fusible sur le rotor 8 peut être compris entre 10 et 15 Nm.

En particulier, la troisième zone fusible 23 du rotor 8 est configurée pour se rompre lorsque la partie avant 16 du stator intermédiaire 6 solidaire de la partie antérieure 38 du rotor 8 est dans une troisième position angulaire P2. La partie antérieure 38 du rotor est ainsi mobile dans les trois positions angulaires P0, P1 et P2.

Dans la variante représentée à la figure 4, la deuxième position angulaire P1 est située entre la première position angulaire P0 et la troisième position angulaire P2.

On peut aussi prévoir une variante (non représentée) dans laquelle la troisième position angulaire P2 est située entre la première position angulaire P0 et la deuxième position angulaire P1. On peut également prévoir une variante (non représentée) dans laquelle les deuxième P1 et troisième P2 positions angulaires sont sensiblement confondues.

De préférence, comme on peut le voir sur les figures 5 et 6, la forme d'emboîtement 37 et la forme d'emboîtement complémentaire 35 sont configurées pour autoriser un jeu angulaire entre la partie arrière 18 du stator intermédiaire 6 et le rotor 8, en particulier la partie postérieure 39 du rotor 8. Cet agencement permet prévoir une configuration comprenant une troisième position angulaire P2 de la partie antérieure du rotor 8 et dans laquelle la deuxième position angulaire P1 est située entre la première position angulaire P0 et la troisième position angulaire P2.

Selon une variante, chaque forme d'emboîtement 37 est constituée par un plot apte à coopérer par emboîtement axial avec un évidement formant forme d'emboîtement complémentaire 35.

Alternativement, on peut prévoir une configuration inverse (non représentée), dans laquelle chaque forme d'emboîtement complémentaire est constituée par un plot apte à coopérer par emboitement axial avec un évidement formant forme d'emboîtement.

Selon une variante, la partie arrière 18 du stator intermédiaire 6 est agencée pour se mouvoir en translation selon l'axe principal du verrou à l'intérieur du stator 4 après rupture de la première zone fusible 20. En particulier, la partie arrière 18 est mobile en translation entre une position initiale dans laquelle la partie arrière 18 est solidaire de la partie centrale 17 du stator intermédiaire 6, et une position finale dans laquelle la partie arrière 18 est bloquée en translation après ladite rupture. On peut prévoir un système de formes de coopération, par exemple de doigt et renfoncement, entre la partie arrière 18 du stator intermédiaire 6 et le stator 4.

Avantageusement, cette configuration permet de renforcer le blocage en rotation du rotor 8, en particulier de la partie postérieure 39 du rotor 8.

Selon une variante, la partie avant 16 du stator intermédiaire 6 est agencée pour coopérer par emboîtement avec au moins une forme de débrayage 22 fixe en rotation ménagée sur la partie arrière 18 du stator intermédiaire 6, lorsque la partie avant 16 et la partie centrale 17 sont en rotation par rapport au stator 4 provoquant la translation axiale de la partie arrière 18 vers sa position finale.

De préférence, les formes de débrayage 22 permettent un déplacement axial de la partie postérieure 18 vis-à-vis de la partie centrale 17.

Avantageusement, les formes de débrayage 22 sont un moyen simple et efficace de déplacer axialement les parties centrale et arrière.

Selon une variante, la partie arrière 18 du stator intermédiaire 6 comporte au moins une forme de couplage 34 apte à s'emboiter axialement dans une forme de couplage complémentaire 42 ménagée sur le moyen de commande 10.

Avantageusement, la partie arrière 18 de cette variante permet de fixer en rotation à la fois le moyen de commande 10 et rotor 8, en particulier la partie postérieure 39 du rotor 8.

Selon une variante, chaque forme de couplage 34 est constituée par une protubérance apte à coopérer par emboitement axial avec un renfoncement formant forme de couplage complémentaire 42.

Alternativement ou en combinaison, la forme de couplage 34 peut faire partie du système de formes de coopération détaillé plus haut, pour une coopération entre le stator 4 et la partie arrière 18 du stator intermédiaire 6. Cette coopération permet le déplacement de ladite partie arrière 18 en translation et en bloque le déplacement en rotation.

L'invention porte également sur un dispositif de serrure notamment pour véhicule automobile, comprenant au moins un verrou 2 tel que décrit précédemment.

La description précédente a été faite avec un rotor et un moyen de commande distincts. Bien entendu ces deux pièces pourraient former une seule et même pièce.

## Revendications

1. Verrou (2) notamment pour mécanisme de serrure de véhicule automobile, comprenant un stator (4) s'étendant selon un axe principal et logeant un stator intermédiaire (6),
- ledit stator intermédiaire (6) logeant un rotor (8) mobile en rotation suivant l'axe principal et configuré pour entraîner en mouvement un moyen de commande (10),
- le rotor (8) comprenant des organes de codage (12) configurés pour maintenir le rotor (8) fixe en rotation par rapport au stator intermédiaire (6) et configurés pour libérer le rotor (8) en rotation par rapport au stator intermédiaire (6) lors de l'introduction d'un insert de clé conforme au codage dans le logement longitudinal du rotor (8),
- le stator intermédiaire (6) comprenant
- une partie avant (16) coopérant avec les organes de codage (12),
- une partie arrière (18) mobile entre une position de libération dans laquelle la partie arrière (18) autorise la rotation du rotor (8) et une position de blocage dans laquelle la partie arrière bloque le rotor (8) en rotation,
- une partie centrale (17) disposée entre la partie avant (16) et la partie arrière (18),
- une première zone fusible (20) disposée entre la partie centrale et la partie arrière (18), et
- une deuxième zone fusible (21) disposée entre la partie avant et la partie centrale (17),
ladite première zone fusible (20) étant adaptée pour se rompre dans une première position angulaire (P0) du stator intermédiaire (6), lorsque le couple exercé sur le stator intermédiaire (6) par un élément (14) non conforme au codage sur le rotor (8) à l'état fixe en rotation atteint un premier couple prédéterminé inférieur aux couples de rupture des organes de codage (12) et de la deuxième zone fusible (21) de sorte que, lorsque la première zone fusible (20) est rompue, la partie arrière (18) est déplacée vers sa position de blocage du rotor (8).

2. Verrou (2) selon la revendication précédente, dans lequel lorsque la première zone fusible (20) est rompue, la partie avant (16) et la partie centrale (17) sont mobiles en rotation suivant l'axe principal relativement à la partie arrière (18).

3. Verrou (2) selon l'une des revendications précédentes, dans lequel ladite deuxième zone fusible (21) est adaptée pour se rompre, après la première zone fusible (20), lorsque le couple exercé atteint un deuxième couple prédéterminé supérieur au premier couple prédéterminé et que le stator intermédiaire (6) est pivoté au-delà d'une deuxième position angulaire (P1 ; P2) située angulairement après la première position angulaire (P0) de sorte que la partie avant (16) est mobile en rotation suivant l'axe principal relativement à la partie centrale (17).

4. Verrou selon la revendication précédente, dans lequel le stator (4) comprend au moins une structure de blocage (45) et la partie centrale (17) du stator intermédiaire (6) comprend au moins une projection (44) configurée pour coopérer avec la structure de blocage (45) à ladite deuxième position angulaire, de sorte à permettre que ladite deuxième zone fusible (21) se rompe au-delà de ladite deuxième position angulaire (P1 ; P2).

5. Verrou selon la revendication précédente, dans lequel ladite projection (44) est une excroissance et ladite structure de blocage (45) est un gaudron de blocage configuré pour maintenir l'excroissance et bloquer la partie centrale (17) en rotation.

6. Verrou selon l'une des revendications précédentes, dans lequel le rotor (8) comprend une troisième zone fusible (23) délimitant une partie antérieure (38) du rotor (8) et une partie postérieure (39) du rotor (8), et la partie arrière (18) du stator intermédiaire (6) comporte au moins une forme d'emboîtement (37) apte à s'emboiter axialement dans une forme d'emboîtement complémentaire (35) ménagée sur la partie postérieure (39) du rotor (8),
la troisième zone fusible du rotor (8) étant adaptée pour se rompre lorsque la partie arrière (18) du stator intermédiaire (6) est couplée à la partie postérieure (39) du rotor et un couple exercé par l'élément (14) sur le rotor (8) atteint un couple de rotor prédéterminé de sorte que la partie antérieure (38) du rotor (8) est mobile en rotation suivant l'axe principal par rapport à la partie postérieure (39) du rotor (8).

7. Verrou selon la revendication précédente, dans lequel chaque forme d'emboîtement (37) est constituée par un plot apte à coopérer par emboitement axial avec un évidement formant forme d'emboîtement complémentaire (35).

8. Verrou selon l'une des revendications précédentes, dans lequel la partie arrière (18) du stator intermédiaire (6) est agencée pour se mouvoir en translation selon l'axe principal du verrou à l'intérieur du stator (4) après rupture de la première zone fusible (20) entre une position initiale dans laquelle la partie arrière (18) est solidaire de la partie centrale (17) du stator intermédiaire (6), et une position finale dans laquelle la partie arrière (18) est bloquée en translation après ladite rupture.

9. Verrou selon la revendication précédente, dans lequel la partie avant (16) du stator intermédiaire (6) est agencée pour coopérer par emboîtement avec au moins une forme de débrayage (22) fixe en rotation ménagée sur la partie arrière (18) du stator intermédiaire (6), lorsque la partie avant (16) et la partie centrale (17) sont en rotation par rapport au stator (4) provoquant la translation axiale de la partie arrière (18) vers sa position finale.

10. Verrou selon l'une des revendications précédentes, dans lequel la partie arrière (18) du stator intermédiaire (6) comporte au moins une forme de couplage (34) apte à s'emboiter axialement dans une forme de couplage complémentaire (42) ménagée sur le moyen de commande (10).

11. Verrou selon la revendication précédente, dans lequel chaque forme de couplage (34) est constituée par une protubérance apte à coopérer par emboitement axial avec un renfoncement formant forme de couplage complémentaire (42).

12. Dispositif de serrure notamment pour véhicule automobile, **caractérisé en ce qu'**il intègre au moins un verrou (2) selon l'une quelconque des revendications précédentes.

## Patentansprüche

1. Verriegelung (2), insbesondere für einen Kraftfahrzeugschlossmechanismus, umfassend einen Stator (4), der sich entlang einer Hauptachse erstreckt und einen zwischengeschalteten Stator (6) aufnimmt,
- wobei der zwischengeschaltete Stator (6) einen Rotor (8) aufnimmt, der gemäß der Hauptachse drehbeweglich und dafür konfiguriert ist, ein Steuermittel (10) bewegend anzutreiben,
- wobei der Rotor (8) Codierglieder (12) umfasst, die dafür konfiguriert sind, den Rotor (8) in Bezug auf den zwischengeschalteten Stator (6) drehfest zu halten, und dafür konfiguriert sind, beim Einführen eines mit der Codierung übereinstimmenden Schlüsseleinsatzes in die Längsaufnahme des Rotors (8) den Rotor (8) in Bezug auf den zwischengeschalteten Stator (6) drehfrei zu geben,
- wobei der zwischengeschaltete Stator (6) umfasst
-- einen vorderen Teil (16), der mit den Codiergliedern (12) zusammenwirkt,
-- einen hinteren Teil (18), der zwischen einer Freigabestellung, in der der hintere Teil (18) die Drehung des Rotors (8) gestattet, und einer Sperrstellung beweglich ist, in der der hintere Teil den Rotor (8) verdrehsicher sperrt,
-- einen mittleren Teil (17), der zwischen dem vorderen Teil (16) und dem hinteren Teil (18) angeordnet ist,
-- eine erste Sicherungszone (20), die zwischen dem mittleren Teil und dem hinteren Teil (18) angeordnet ist, und
-- eine zweite Sicherungszone (21), die zwischen dem vorderen Teil und dem mittleren Teil (17) angeordnet ist,
wobei die erste Sicherungszone (20) dafür geeignet ist, in einer ersten Winkelstellung (P0) des zwischengeschalteten Stators (6) zu brechen, wenn das von einem nicht mit der Codierung übereinstimmen Element (14) im drehfesten Zustand am Rotor (8) auf den zwischengeschalteten Stator (6) ausgeübte Moment ein erstes vorbestimmtes Moment erreicht, das kleiner ist als die Bruchmomente der Codierglieder (12) und der zweiten Sicherungszone (21), sodass, wenn die erste Sicherungszone (20) bricht, der hintere Teil (18) zu seiner Sperrposition des Rotors (8) verschoben wird.

2. Verriegelung (2) nach dem vorstehenden Anspruch, wobei, wenn die erste Sicherungszone (20) bricht, der vordere Teil (16) und der mittlere Teil (17) relativ zum hinteren Teil (18) gemäß der Hauptachse drehbeweglich sind.

3. Verriegelung (2) nach einem der vorstehenden Ansprüche, wobei die zweite Sicherungszone (21) dafür geeignet ist, nach der ersten Sicherungszone (20) zu brechen, wenn das ausgeübte Moment ein zweites vorbestimmtes Moment erreicht, das größer ist als das erste vorbestimmte Moment, und der zwischengeschaltete Stator (6) jenseits einer zweiten Winkelstellung (P1; P2) verschwenkt wird, die winkelmäßig nach der ersten Winkelstellung (P0) liegt, sodass der vordere Teil (16) relativ zum mittleren Teil (17) gemäß der Hauptachse drehbeweglich ist.

4. Verriegelung nach dem vorstehenden Anspruch, wobei der Stator (4) mindestens eine Sperrstruktur (45) umfasst, und der mittlere Teil (17) des zwischengeschalteten Stators (6) mindestens einen Vorsprung (44) umfasst, der dafür konfiguriert ist, an der zweiten Winkelstellung mit der Sperrstruktur (45) zusammenzuwirken, um zu ermöglichen, dass die zweite Sicherungszone (21) jenseits der zweiten Winkelstellung (P1; P2) bricht.

5. Verriegelung nach dem vorstehenden Anspruch, wobei der Vorsprung (44) ein Ansatz ist, und die Sperrstruktur (45) eine Sperrsenke ist, die dafür konfiguriert ist, den Ansatz zu halten und den mittleren Teil (17) verdrehsicher zu sperren.

6. Verriegelung nach einem der vorstehenden Ansprüche, wobei der Rotor (8) eine dritte Sicherungszone (23) umfasst, die einen vorderseitigen Teil (38) des Rotors (8) und einen rückseitigen Teil (39) des Rotors (8) abgrenzt, und der hintere Teil (18) des zwischengeschalteten Stators (6) mindestens eine Eingriffsform (37) umfasst, die axial in eine komplementäre Eingriffsform (35), welche am rückseitigen Teil (39) des Rotors (8) ausgestaltet ist, eingreifen kann,
wobei die dritte Sicherungszone des Rotors (8) dafür geeignet ist, zu brechen, wenn der hintere Teil (18) des zwischengeschalteten Stators (6) mit dem rückseitigen Teil (39) des Rotors gekoppelt ist und ein von dem Element (14) am Rotor (8) ausgeübtes Moment ein vorbestimmtes Rotormoment erreicht, sodass der vorderseitige Teil (38) des Rotors (8) in Bezug auf den rückseitigen Teil (39) des Rotors (8) gemäß der Hauptachse drehbeweglich ist.

7. Verriegelung nach dem vorstehenden Anspruch, wobei jede Eingriffsform (37) aus einem Zapfen besteht, der durch axialen Eingriff mit einer Aussparung, die eine komplementäre Eingriffsform (35) bildet, zusammenwirken kann.

8. Verriegelung nach einem der vorstehenden Ansprüche, wobei der hintere Teil (18) des zwischengeschalteten Stators (6) dafür eingerichtet ist, sich nach Bruch der ersten Sicherungszone (20) im Inneren des Stators (4) translatorisch entlang der Hauptachse der Verriegelung zwischen einer Anfangsstellung, in der der hintere Teil (18) fest mit dem mittleren Teil (17) des zwischengeschalteten Stators (6) verbunden ist, und einer Endstellung zu bewegen, in der der hintere Teil (18) nach dem Bruch translationssicher gesperrt ist.

9. Verriegelung nach dem vorstehenden Anspruch, wobei der vordere Teil (16) des zwischengeschalteten Stators (6) dafür eingerichtet ist, durch Eingriff mit mindestens einer drehfesten Entkopplungsform (22), die am hinteren Teil (18) des zwischengeschalteten Stators (6) ausgestaltet ist, zusammenzuwirken, wenn sich der vordere Teil (16) und der mittlere Teil (17) in Bezug auf den Stator (4) drehen, wodurch die axiale Translation des hinteren Teils (18) zu seiner Endstellung hin bewirkt wird.

10. Verriegelung nach einem der vorstehenden Ansprüche, wobei der hintere Teil (18) des zwischengeschalteten Stators (6) mindestens eine Kopplungsform (34) umfasst, die axial in eine komplementäre Kopplungsform (42), welche am Steuermittel (10) ausgestaltet ist, eingreifen kann.

11. Verriegelung nach dem vorstehenden Anspruch, wobei jede Kopplungsform (34) aus einer Erhebung besteht, der durch axialen Eingriff mit einer Verstärkung, welche eine komplementäre Kopplungsform (42) bildet, zusammenwirken kann.

12. Schlossvorrichtung, insbesondere für ein Kraftfahrzeug, **dadurch gekennzeichnet, dass** es mindestens eine Verriegelung (2) nach einem der vorstehenden Ansprüche beinhaltet.

## Claims

1. A latch (2) in particular for a lock mechanism of a motor vehicle, comprising a stator (4) extending according to a main axis and housing an intermediate stator (6),
- said intermediate stator (6) housing a rotor (8) movable in rotation according to the main axis and configured to movably drive a control means (10),
- the rotor (8) comprising coding members (12) configured to keep the rotor (8) secured in rotation with the intermediate stator (6) and configured to release the rotation of the rotor (8) relative to the intermediate stator (6) upon introduction of a key insert compliant with the coding into the longitudinal housing of the rotor (8),
- the intermediate stator (6) comprising
• a front portion (16) cooperating with the coding members (12),
• a rear portion (18) movable between a release position in which the rear portion (18) enables the rotation of the rotor (8) and a blocking position in which the rear portion rotatably blocks the rotor (8),
• a central portion (17) disposed between the front portion (16) and the rear portion (18),
• a first fusible area (20) disposed between the central portion and the rear portion (18), and
• a second fusible area (21) disposed between the front portion and the central portion (17),
said first fusible area (20) being adapted to break up in a first angular position (P0) of the intermediate stator (6), when the torque exerted on the intermediate stator (6) by an element (14) non-compliant with the coding on the rotor (8) in the rotatably secured state, reaches a first predetermined torque lower than the breakage torques of the coding members (12) and of the second fusible area (21) so that, when the first fusible area (20) is broken, the rear portion (18) is displaced toward its rotor (8) blocking position.

2. The latch (2) according to the preceding claim, wherein when the first fusible area (20) is broken, the front portion (16) and the central portion (17) are movable in rotation according to the main axis relative to the rear portion (18).

3. The latch (2) according to any of the preceding claims, wherein said second fusible area (21) is adapted to break up, after the first fusible area (20), when the exerted torque reaches a second predetermined torque higher than the first predetermined torque and the intermediate stator (6) is pivoted beyond a second angular position (P1; P2) located angularly next to the first angular position (P0) so that the front portion (16) is movable in rotation according to the main axis relative to the central portion (17).

4. The latch according to the preceding claim, wherein the stator (4) comprises at least one blocking structure (45) and the central portion (17) of the intermediate stator (6) comprises at least one projection (44) configured to cooperate with the blocking structure (45) at said second angular position, so as to enable said second fusible area (21) to break up beyond said second angular position (P1; P2).

5. The latch according to the preceding claim, wherein said projection (44) is an excrescence and said blocking structure (45) is a blocking sear configured to hold the excrescence and rotatably block the central portion (17).

6. The latch according to any of the preceding claims, wherein the rotor (8) comprises a third fusible area (23) delimiting an anterior portion (38) of the rotor (8) and a posterior portion (39) of the rotor (8), and the rear portion (18) of the intermediate stator (6) includes at least one interlocking form (37) capable of interlocking axially into a complementary interlocking form (35) formed on the posterior portion (39) of the rotor (8),
the third fusible area of the rotor (8) being adapted to break up when the rear portion (18) of the intermediate stator (6) is coupled to the posterior portion (39) of the rotor and a torque exerted by the element (14) on the rotor (8) reaches a predetermined rotor torque so that the anterior portion (38) of the rotor (8) is movable in rotation according to the main axis relative to the posterior portion (39) of the rotor (8).

7. The latch according to the preceding claim, wherein each interlocking form (37) is constituted by a stud capable of cooperating by axial interlocking with a recess forming a complementary interlocking form (35).

8. The latch according to any of the preceding claims, wherein the rear portion (18) of the intermediate stator (6) is arranged so as to move in translation according to the main axis of the latch inside the stator (4) after breakage of the first fusible area (20) between an initial position in which the rear portion (18) is secured to the central portion (17) of the intermediate stator (6), and a final position in which the rear portion (18) is blocked in translation after said breakage.

9. The latch according to the preceding claim, wherein the front portion (16) of the intermediate stator (6) is arranged to cooperate by interlocking with at least one release form (22) fixed in rotation formed on the rear portion (18) of the intermediate stator (6), when the front portion (16) and the central portion (17) are in rotation relative to the stator (4) causing the axial translation of the rear portion (18) toward its final position.

10. The latch according to any of the preceding claims, wherein the rear portion (18) of the intermediate stator (6) includes at least one coupling form (34) capable of interlocking axially into a complementary coupling form (42) formed on the control means (10).

11. The latch according to the preceding claim, wherein each coupling form (34) is constituted by a protrusion capable of cooperating by axial interlocking with an indentation forming a complementary coupling form (42).

12. A lock device in particular for a motor vehicle, **characterized in that** it integrates at least one latch (2) according to any one of the preceding claims.
